# EUROPÄISCHE PATENTSCHRIFT

(11) **EP 2 267 419 B1**
(45) Veröffentlichungstag und Bekanntmachung des Hinweises auf die Patenterteilung: **21.11.2012**
(21) Anmeldenummer: 10006515.0
(22) Anmeldetag: 23.06.2010
(51) Int. Cl.: G01G 23/00, G01G 19/414, G07G 1/00

(54) **Waage**
Scale
Balance

(30) Priorität: 26.06.2009 DE 102009030585
(43) Veröffentlichungstag der Anmeldung: 29.12.2010
(73) Patentinhaber: Bizerba GmbH & Co. KG, 72336 Balingen (DE)
(72) Erfinder: Leu, Martin, 72336 Balingen (DE)
(74) Vertreter: Wagner, Jürgen

(56) Entgegenhaltungen:
- WO-A1-02/15644
- JP-A- 2003 128 215
- US-B1- 6 315 197
- US-B1- 6 431 444

## Beschreibung

Die Erfindung betrifft eine Waage insbesondere eine Ladenwaage zum Wiegen von Wiegegut nach den Merkmalen des Oberbegriffs des Anspruchs 1

Eine Ladenwaage wird in der Praxis von mehreren Bedienern bedient. Dabei ist es notwendig, dass der jeweilige Bediener sich an der Waage identifiziert. Um diese Identifizierung zu vereinfachen, gibt es bereits mehrere bekannte Lösungen.

In der DE 29 42 420 C2 wird vorgeschlagen, dass sich ein Bediener mittel eines drahtlosen Senders an einer Waage identifiziert.

Die EP 1 310 140 B1 zeigt eine Waage mit einer Vorrichtung zur drahtlosen Identifikation eines Verkäufers, bei der das Verkaufspersonal einen drahtlos lesbaren Transponder trägt.

Aus der EP 1 320 730 B1 ist eine Waage mit einer biometrischen Bedieneridentifikation bekannt. Dort wird über eine Stimmerkennung oder einen Fingerabdrucksensor eine Bedieneridentifikation durchgeführt.

Die US 6 431 444 B1 offenbart eine Laden-/Kassenwaage mit einem scanner für Barcodes. Wartungs- und Aufsichtspersonal kann sich mittels einer Karte mit aufgedrucktem Barcode an der Laden-/Kassenwaage identifizieren. Der Barcode auf der Karte enthält dabei verschlüsselte Identifizierungs- und Kennwortinformationen. Die Karte kann über den gewöhnlichen Kassenbondrucker erstellt werden.

Die JP 2003 128 215 offenbart ein Inventarsystem, bei dem die Anzahl von Objekten einer Produktgruppe über das Gewicht bestimmt wird. Personal das für die Ausgabe der Objekte aus dem Inventarsystem zuständig ist, trägt ein Armband mit einem identifizierenden Barcode. Bei einer Ausgabe wird sowohl der Barcode des Objekts als auch der Barcode des Armbandes zur Registrierung des Transfers gescannt.

Der Nachteil dieser bekannten Verfahren ist der relativ hohe technische Zusatzaufwand. Daher sind diese bekannten Verfahren relativ teuer in der Realisierung.

Der Erfindung liegt die Aufgabe zugrunde, eine Waage mit einer automatischen Benutzeridentifikation zu schaffen, die relativ einfach aufgebaut und dabei kostengünstig in der Herstellung ist.

Die Aufgabe wird erfindungsgemäß durch eine Waage gemäß den Merkmalen des Anspruchs 1 gelöst.

Die Waage weist eine Steuerungsvorrichtung auf, die eine Bedieneridentität automatisch ermittelt. Dazu erfasst die Steuerungsvorrichtung über eine Kamera einen an einem Bediener der Waage angebrachten Code. Der Code kann z.B. auf einem Namensschild oder einem Anstecker oder an der Kleidung sichtbar angebracht sein. Diesen Code vergleicht die Steuerungsvorrichtung mit gespeicherten Codes, die in einem Personendatenspeicher hinterlegt und jeweils einzelnen Bedienern zugeordnet sind. Durch einen übereinstimmenden Vergleich selektiert die Steuerungsvorrichtung den Bediener und weist die bei dem Bedienvorgang ermittelten Daten automatisch diesem Bediener zu, vorzugsweise indem die Steuerungsvorrichtung diese Daten miteinander verbindet. Dabei kann das verbundene Datum aus einem gemeinsamen Datensatz bestehen, oder es kann der Gewichtswert in einer Tabelle oder in einer Matrix abgespeichert werden, wobei die Tabelle oder die Matrix eine Struktur aufweist, die eine eindeutige Zuordnung zu der Benutzeridentität ermöglicht.

Es ist vorgesehen, dass die Steuerungsvorrichtung diese verbundenen Daten in einem Verkaufsspeicher abspeichert. Der

Verkaufsspeicher kann dabei ein in der Waage befindlicher Speicher zur, insbesondere eichfähigen, Abwicklung eines Verkaufsvorganges sein oder er kann ein über eine Schnittstelle an die Waage angeschlossener Verkaufsspeicher, z. B. eines zentralen Servers zur Warenerfassung sein.

Der Verkaufsspeicher ist ein elektronisch les- und beschreibbarer Speicher oder Speicherbereich, vorzugsweise ein RAM oder Flash-Speicher, der zur Zwischenspeicherung von Wiegevorgängen dient. Die Zwischengespeicherten Wiegedaten werden am Ende eines Verkaufsvorganges zum Zweck der Rechnungserstellung abgerufen, wobei anhand der Bedieneridentität die Zugehörigkeit der Daten zu einem Bediener oder einem Verkaufsvorgang selektiert wird. So wird ermöglicht, dass ein Verkaufsvorgang weitgehend automatisiert abläuft. Ein Bediener der Waage muss nur noch sehr wenige manuelle Eingaben vornehmen. Der Bediener wird vorzugsweise beim Herantreten an die Waage automatisch erkannt. Eine manuelle Eingabe der Bedieneridentität ist somit nicht mehr notwendig. Auch die Wiegedaten werden automatisch erfasst und gespeichert. Somit reduzieren sich die notwendigen Eingaben an der Waage, oder die Handgriffe zu deren Bedienung weitestgehend.

Bediener oder Benutzer bedeutet in diesem Kontext einen Benutzer der Waage, der in einem Laden einen Kunden bedient, um z. B. frische Lebensmittel wie Fleisch, Wurst oder Käse abzuwiegen und zu verpacken. Alle Bediener oder Benutzer sind jedenfalls eine Gruppe Individuen von definierter Zahl, deren Daten in dem Personenspeicher hinterlegt sind.

Der Code kann beispielsweise auf einem Namensschild, einem Etikett oder einem Anstecker angebracht sein, das der Bediener gut sichtbar trägt. Bei dem Code kann es sich um einen maschinell einfach lesbaren Code handeln, dessen Codeumfang lediglich auf die maximale Anzahl von Bedienern abgestimmt sein muss. Dabei kann es sich um einen einfachen Formencode, bestehend aus einer Abfolge von einfachen geometrischen Figuren wie beispielsweise Kreise, Quadrate und Dreiecke handeln oder um einen sonstigen graphischen Code, beispielsweise einen Barcode oder einen 2D-Code. Über solch einen einfach aufgebauten Code reduzieren sich die Anforderungen an die Kamera, beispielsweise deren optische Auflösung, bzw. die zur Auswertung der Bilder notwendige Rechenleistung erheblich, so dass es auch mit relativ kostengünstiger Hardware möglich ist, eine zuverlässige automatische Bedienererkennung zu realisieren.

Es kann in einer Ausführung vorgesehen sein, dass es sich bei dem Code um einen für das menschliche Auge unsichtbaren Code handelt, der mit einer Ultravioletten Farbe oder einer Infraroten Farbe auf ein Trägermaterial, vorzugsweise ein Etikett, aufgebracht wird. Eine elektronische Kamera ist ohne weiteres in der Lage, Bilder im Infrarot-Bereich oder im Ultraviolett-Bereich aufzunehmen und kann so den Code einfach erkennen.

Von Vorteil ist, wenn der Code von der Waage bzw. dem Steuergerät selbst generiert wird und von einem an die Waage angeschlossenen Drucker, insbesondere einem Etikettendrucker, ausgegeben wird. Eine Waage weist in der Regel bereits einen angeschlossenen Drucker auf, um Etiketten oder Verkaufsbons zu drucken. Durch die Verwendung dieses vorhandenen Druckers sind der notwendige zusätzliche Aufwand und damit die notwendigen Kosten zur Realisierung der erfindungsgemäßen Vorrichtung sehr gering.

In einer Ausführung ist vorgesehen, dass die Steuerungsvorrichtung einen Lernmodus aufweist, um die Codes den in dem Personendatenspeicher gespeicherten Bedienerdaten zuzuweisen. Die Daten in dem Personendatenspeicher können aus einer Personaldatenbank übernommen oder manuell eingegeben werden. Die Zuweisung der Codes kann erfolgen, indem ein neuer Code in den Erfassungsbereich der Kamera gehalten wird und dann der Code einem neuen Bediener zugewiesen wird.

Ebenso kann vorgesehen sein, dass die Steuerungsvorrichtung Namensschilder für die jeweiligen Bediener generiert, und die Namensschilder mit dem Namen des Bedieners und dem Code zusammen über den Drucker der Waage ausdruckt. Über die Kamera kann das Namensschild auf Wunsch auch mit dem Bild eines Bedieners versehen und ausgedruckt werden. Es ist auch möglich, dass ein Logo gemeinsam mit dem Code ausgedruckt wird.

Von Vorteil ist, wenn die Kamera in das Gehäuse der Waage vollständig integriert und somit mechanisch geschützt ist. Um eine gute Erfassung des Codes sicherzustellen kann vorgesehen sein, dass die Kamera ein optisches oder digitales Zoom aufweist. Auch eine automatische Schwenk-Neigevorrichtung kann zum Bewegen der Kamera vorgesehen sein. Die Steuerungsvorrichtung kann das Zoom oder die Schwenk- Neigevorrichtung ansteuern, um den Erfassungsbereich der Kamera auf den Bildausschnitt mit dem Code auszurichten bzw. den Bildausschnitt zu vergrößern. Hierfür ist vorgesehen, dass die Bilderkennung des Codes zweistufig abläuft. Zuerst selektiert die Steuerungsvorrichtung anhand vorgegebener Kriterien wie Form oder Muster einen oder mehrere Bildbereich, in denen der Code zu finden ist. Anschließend steuert die Steuerungsvorrichtung die Kamera an, um deren Bildausschnitt auf diese Bildbereiche auszurichten. Dadurch wird die Qualität des aufgenommenen Bildes verbessert und die digitale Auswertung erleichtert. Als Kamera kann ein gebräuchliches CCTV oder Video-Kamera-Modul mit CMOS oder CCD-Chip und entsprechend passendem Objektiv verwendet werden.

In der Praxis kann es vorkommen, dass die Kamera gleichzeitig zwei oder mehr Codes erfasst, z. B. wenn zwei Bediener gleichzeitig vor der Waage stehen. In diesem Fall kann das Steuergerät auf dem Display der Waage eine Auswahl der erfassten Bediener anzeigen, um eine manuelle Zuordnung des richtigen Bedieners vorzunehmen.

Um die für die Codeerkennung notwendige Rechenleistung möglichst gering zu halten, kann vorgesehen sein, dass die Steuerungsvorrichtung die Codeerkennung nicht ständig vornimmt. So kann die Steuerungsvorrichtung die Benutzererkennung in vorgegebenen Intervallen, vorzugsweise zweimal pro Sekunde, oder einmal pro Sekunde oder alle zwei Sekunden starten.

In einer Ausführung kann die Steuerungsvorrichtung die Benutzererkenung starten oder den Zeitpunkt für eine Benutzererkennung bestimmen, sobald Ware auf die Lastplatte aufgelegt wird. Dann erkennt der Gewichtssensor einen ansteigenden Gewichtswert und sendet diesen an die Steuerungsvorrichtung, so dass diese den ansteigenden Gewichtswert als Trigger für eine Benutzererkennung verwenden kann.

Weitere Ausführungsbeispiele der Erfindung sind in der Figur dargestellt und der dazugehörenden Beschreibung beschrieben.

Die Ladenwaage 1 weist ein Gehäuse 2 mit einer Last- bzw. Wiegeplatte 21 auf. Das Gehäuse 2 ist an seiner Unterseite über Füße auf einer ebenen Fläche, z. B. einer Verkaufstheke, abstellbar. Die Füße sind in der Höhe verstellbar, um zu gewährleisten, dass die Waage 1 auch bei unebenem Untergrund immer genau horizontal ausgerichtet ist. In dem Gehäuse 2 ist ein nicht dargestellter Gewichtsensor zum Erfassen des Gewichts eines auf die Lastplatte 21 aufgelegten Gegenstandes, also des Wiegeguts, angeordnet.

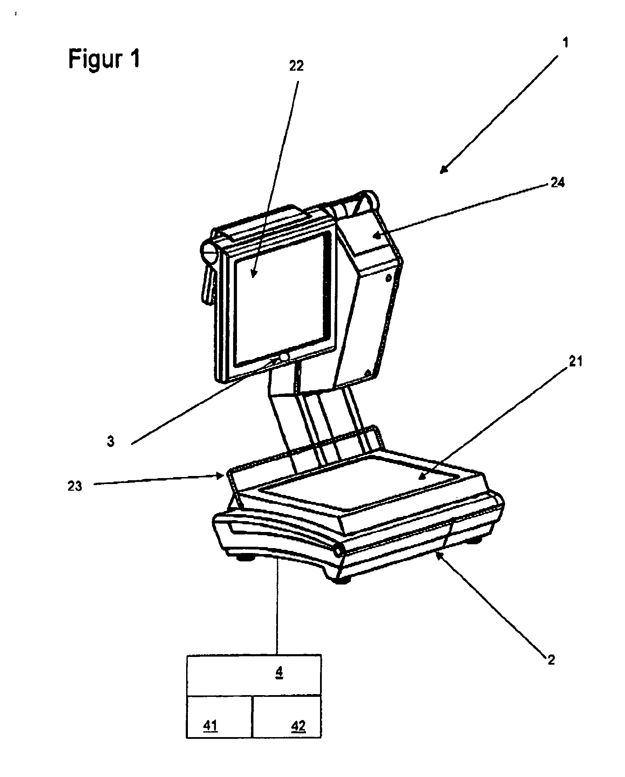

Das Gehäuse 2 weist zudem einen Drucker 24 zum Drucken von Etiketten und ein Display 22 auf. Das Display 22 ist als Touch-Screen ausgebildet und dient sowohl zur Anzeige als auch zur Eingabe von Daten. Eine Steuerungsvorrichtung 4 steuert die Waage und ist mit einem Personendatenspeicher 41 und einem Verkaufsspeicher 42 verbunden. Die Steuerungsvorrichtung 4 und die Speicher, Personendatenspeicher 41, Verkaufsspeicher 42 und sind in der Figur schematisch dargestellt. Sie können innerhalb einer Waage integriert angeordnet sein, oder aber separat z. B. in einem räumlich entfernt von den Waagen angeordneten Server installiert sein. Die Speicher 41, 42 können jeweils als physikalisch getrennte lesbare und beschreibbare Speicher ausgebildet sein. Sie können jedoch auch auf einem physikalischen Speicher als unterschiedliche Speicherbereiche realisiert werden. Die Verbindung der Steuervorrichtung 4 mit den Speichern 41, 42 und der Waage 1 ist über digitale Kommunikationsschnittstellen realisiert, die in der Figur 1 als Leitungen skizziert sind.

Im oberen Bereich des Gehäuses 2 ist unterhalb des Displays 22 eine Kamera 23 angeordnet. Das Gesichtsfeld der Kamera 23 ist auf einen Bediener hin, also auf den Bereich vor der Waage hin ausgerichtet. Die Kamera 23 nimmt ein Bild des Gesichtsfelds auf, welches digitalisiert und einer geometrischen Mustererkennung unterzogen wird, um einen Code zu erkennen. Bei der Mustererkennung werden aus dem Bild Erkennungsmerkmale extrahiert, die mit den in dem Personendatenspeicher 41 gespeicherten Codes verglichen werden. Anhand der besten Übereinstimmung wird der passende Bediener automatisch selektiert.

Die Steuerungsvorrichtung 4 verknüpft diese Bedieneridentität automatisch mit den Wiegedaten und legt bei einer Bestätigung des Wiegevorganges die verbundenen Daten automatisch in dem Verkaufsspeicher 42 ab. Danach können weitere Bediener die Waage bedienen oder weitere Wiegevorgänge des gleichen Bedieners folgen. Am Ende eines Verkaufsvorganges wird dieser über eine Eingabe des Bedieners abgeschlossen. Die Steuerungsvorrichtung 4 liest dann alle zu dem Bediener gehörenden Daten aus dem Verkaufsspeicher 42 und druckt über den Drucker 26 eine Rechnung aus. Die ausgedruckten Verkaufsdaten werden dabei aus dem Verkaufsspeicher 42 gelöscht.

Neue Bediener werden angelegt, indem beispielsweise die Daten, vorzugsweise der Namen eines neuen Bedieners, manuell an der Waage eingegeben und in dem Personenspeicher abgespeichert werden. Zusätzlich kann über die Kamera 23 ein Bild des Bedieners aufgenommen und in dem Personendatenspeicher 41 gespeichert werden. Ein zu dem neuen Bediener gehörender, individueller Code wird von der Steuerungsvorrichtung 4 automatisch generiert und mit in dem Personendatenspeicher abgelegt.

Über den in der Waage integrierten Drucker 24 kann dann beispielsweise über ein separates Menue der Waage 1 auf einfache Art und Weise ein Ausweis bzw. ein Namensschild des neuen Bedieners erstellt werden. Bei der Erstellung eines Ausweises bzw. Namensschilds wird der individuelle Code mit ausgedruckt.

## Patentansprüche

1. Waage, insbesondere Ladenwaage (11, 12), mit einem eine Lastplatte (21) tragendem Gehäuse (2) und einem Display (22) zur Anzeige eines Gewichtswertes von auf der Lastplatte (21) befindlichem Wägegut, wobei ein mit der Lastplatte (21) verbundener Gewichtssensor den Gewichtswert ermittelt, und mit einer Steuerungsvorrichtung (4) die mit einem Personendatenspeicher (41) und mit einer einen Bediener der Waage erfassenden Kamera verbunden ist,
**dadurch gekennzeichnet,**
**dass** die Steuerungsvorrichtung (4) eingerichtet ist, über die Kamera einen am Bediener der Waage sichtbar angebrachten Code optisch zu erfassen und durch einen Vergleich des erfassten Codes mit den in dem Personendatenspeicher (41) gespeicherten Codes automatisch den Gewichtswert des Wägeguts mit einer ermittelten Bedieneridentität zu verbinden.

2. Waage nach Anspruch 1,
**dadurch gekennzeichnet,**
**dass** die Steuerungsvorrichtung (4) eingerichtet ist, das mit der Bedieneridentität verbundene Datum in einem
Verkaufsspeicher (42) zu speichern.

3. Waage nach Anspruch 1 oder 2,
**dadurch gekennzeichnet,**
**dass** die Kamera in dem Gehäuse (2) vollständig aufgenommen ist.

4. Waage nach einem der Ansprüche 1 bis 3,
**dadurch gekennzeichnet,**
**dass** die Steuerungsvorrichtung (4) eingerichtet ist, den Code zu generieren und über einen Drucker (24) auszudrucken.

5. Waage nach Anspruch 4,
**dadurch gekennzeichnet,**
**dass** der Drucker (24) ein in das Gehäuse integrierter Etikettendrucker ist.

6. Waage nach einem der Ansprüche 1 bis 5,
**dadurch gekennzeichnet,**
**dass** die Steuerungsvorrichtung (4) einen Lernmodus aufweist, um über die Kamera erfasste Codes einem Benutzer zuzuordnen und in dem Personendatenspeicher (41) abzuspeichern.

7. Waage nach einem der Ansprüche 1 bis 6,
**dadurch gekennzeichnet,**
**dass** der Code ein Formencode oder ein 2D-Code ist, wobei der Code vorzugsweise auf einem Namensschild des Bedieners angebracht ist.

8. Waage nach Anspruch 7,
**dadurch gekennzeichnet,**
**dass** die Steuerungsvorrichtung (4) eingerichtet ist, ein Namensschild zusammen mit einem Namen des Bedieners und dem Code über den Drucker (24) der Waage aus zudrucken.

9. Waage nach einem der Ansprüche 1 bis 8,
**dadurch gekennzeichnet,**
**dass** die Steuerungsvorrichtung (4) eingerichtet ist, einen Code zu erkennen, indem sie zuerst die Position eines Codes in einem über die Kamera aufgenommenen Bild bestimmt und dann die Kamera ansteuert, um den Bildausschnitt mit der Position des Codes zu vergrößern.

10. Waage nach Anspruch 9,
**dadurch gekennzeichnet,**
**dass** die Kamera ein digitales oder optisches Zoom aufweist.

11. Waage nach einem der Ansprüche 1 bis 10,
**dadurch gekennzeichnet,**
**dass** die Steuerungsvorrichtung (4) einen Auswahlmodus aufweist und beim gleichzeitigen Erkennen zweier oder mehrerer Codes die zu den Codes erkannten Bediener zur manuellen Auswahl anzeigt.

12. Waage nach einem der Ansprüche 1 bis 11,
**dadurch gekennzeichnet,**
**dass** die Steuerungsvorrichtung (4) eingerichtet ist, die Codeerkennung in regelmäßigen Intervallen durch zuführen.

13. Waage nach einem der Ansprüche 1 bis 11
**dadurch gekennzeichnet, dass** die Steuerungsvorrichtung (4) eingerichtet ist, die Codeerkennung durch zuführen sobald der Gewichtssensor einen
ansteigenden Gewichtswert detektiert.

## Claims

1. Scale, in particular retail scale (11, 12), having a housing (2), which bears a load plate (21), and a display (22) for displaying a weight value of material to be weighed which is situated on the load plate (21), a weight sensor connected to the load plate (21) determining the weight value, and having a control apparatus (4) which is connected to a personal data memory (41) and to a camera which records an operator of the scale, **characterized in that**
the control apparatus (4) is set up to optically record, via the camera, a code which is visibly applied to the operator of the scale and to automatically link the weight value of the material to be weighed to a determined operator identity by comparing the recorded code with the codes stored in the personal data memory (41).

2. Scale according to Claim 1,
**characterized in that**
the control apparatus (4) is set up to store the item of data linked to the operator identity in a sales memory (42).

3. Scale according to Claim 1 or 2,
**characterized in that**
the camera is completely accommodated in the housing (2).

4. Scale according to one of Claims 1 to 3, **characterized in that**
the control apparatus (4) is set up to generate the code and to print said code via a printer (24).

5. Scale according to Claim 4,
**characterized in that**
the printer (24) is a label printer integrated in the housing.

6. Scale according to one of Claims 1 to 5, **characterized in that**
the control apparatus (4) has a learning mode in order to assign codes recorded via the camera to a user and to store said codes in the personal data memory (41).

7. Scale according to one of Claims 1 to 6, **characterized in that**
the code is a shape code or a 2D code, the code preferably being applied to the operator's name tag.

8. Scale according to Claim 7,
**characterized in that**
the control apparatus (4) is set up to print a name tag together with a name of the operator and the code via the printer (24) of the scale.

9. Scale according to one of Claims 1 to 8, **characterized in that**
the control apparatus (4) is set up to detect a code by first of all determining the position of a code in an image recorded via the camera and then controls the camera in order to enlarge the image section containing the position of the code.

10. Scale according to Claim 9,
**characterized in that**
the camera has digital or optical zoom.

11. Scale according to one of Claims 1 to 10, **characterized in that**
the control apparatus (4) has a selection mode and, when two or more codes are simultaneously detected, displays the operators detected for the codes for the purpose of manual selection.

12. Scale according to one of Claims 1 to 11, **characterized in that**
the control apparatus (4) is set up to detect codes at regular intervals.

13. Scale according to one of Claims 1 to 11, **characterized in that**
the control apparatus (4) is set up to detect codes as soon as the weight sensor detects an increasing weight value.

## Revendications

1. Balance, notamment balance de magasin (11, 12) comprenant un logement (2) portant une plaque de chargement (21) et un afficheur (22) destiné à afficher une valeur de poids d'un article à peser se trouvant sur la plaque de chargement (21), dans laquelle un capteur de poids relié à la plaque de chargement (21) détermine la valeur de poids, et comprenant un dispositif de commande (4) relié à une mémoire de données personnelles (41) et à une caméra détectant un opérateur de la balance, **caractérisé en ce que** le dispositif de commande (4) est conçu pour détecter optiquement un code placé de manière visible sur l'opérateur de la balance et pour relier automatiquement par une comparaison des codes détectés aux codes stockés dans la mémoire de données personnelles (41) la valeur de poids de l'article à peser à une identité d'opérateur obtenue.

2. Balance selon la revendication 1, **caractérisée en ce que** le dispositif de commande (4) est conçu pour stocker la donnée liée à l'identité de l'opérateur dans une mémoire de vente (42).

3. Balance selon la revendication 1 ou 2, **caractérisée en ce que** la caméra est entièrement logée dans le boîtier (2).

4. Balance selon l'une quelconque des revendications 1 à 3, **caractérisée en ce que** le dispositif de commande (4) est conçu pour générer le code et l'imprimer au moyen d'une imprimante (24).

5. Balance selon la revendication 4, **caractérisée en ce que** l'imprimante (24) est une imprimante à étiquettes intégrée dans le boîtier.

6. Balance selon l'une quelconque des revendications 1 à 5, **caractérisée en ce que** le dispositif de commande (4) comprend un module d'apprentissage destiné à associer les codes détectés au moyen de la caméra à un utilisateur et à les stocker dans la mémoire de données personnelles (41).

7. Balance selon l'une quelconque des revendications 1 à 6, **caractérisée en ce que** le code est un code de forme ou un code bidimensionnel, dans lequel le code est de préférence placé sur une plaque d'identification de l'opérateur.

8. Balance selon la revendication 7, **caractérisée en ce que** le dispositif de commande (4) est conçu pour imprimer une plaque d'identification en association avec un nom de l'opérateur et le code au moyen de l'imprimante (24) de la balance.

9. Balance selon l'une quelconque des revendications 1 à 8, **caractérisée en ce que** le dispositif de commande (4) est conçu pour détecter un code en déterminant tout d'abord la position d'un code dans une image acquise au moyen de la caméra puis en commandant la caméra afin d'agrandir le fragment d'image avec la position du code.

10. Balance selon la revendication 9, **caractérisée en ce que** la caméra comprend un zoom numérique ou optique.

11. Balance selon l'une quelconque des revendications 1 à 10, **caractérisée en ce que** le dispositif de commande (4) comprend un mode de sélection et, lors de la détection simultanée de deux ou plusieurs codes, affiche les opérateurs identifiés aux codes pour une sélection manuelle.

12. Balance selon l'une quelconque des revendications 1 à 11, **caractérisée en ce que** le dispositif de commande (4) est conçu pour effectuer une détection de code à des intervalles réguliers.

13. Balance selon l'une quelconque des revendications 1 à 11, **caractérisée en ce que** le dispositif de commande (4) est conçu pour effectuer une reconnaissance de code dès que le capteur de poids a détecté une valeur de poids croissante.
